# EUROPEAN PATENT SPECIFICATION

(11) **EP 4 641 306 B1**
(45) Date of publication and mention of the grant of the patent: **23.09.2026**
(21) Application number: 25170538.0
(22) Date of filing: 15.04.2025
(51) Int. Cl.: G03G 15/01, G03G 15/00, G03G 15/043

(54) **COLOR CORRECTION PATTERN FORMING METHOD AND IMAGE FORMING DEVICE**
VERFAHREN ZUR ERZEUGUNG VON FARBKORREKTURMUSTERN UND BILDERZEUGUNGSVORRICHTUNG
PROCÉDÉ DE FORMATION DE MOTIF DE CORRECTION DE COULEUR ET DISPOSITIF DE FORMATION D'IMAGE

(30) Priority: 22.04.2024 CN 202410488210
(43) Date of publication of application: 29.10.2025
(73) Proprietor: Zhuhai Pantum Electronics Co., Ltd., Zhuhai, Guangdong (CN)
(72) Inventor: LI, Shiyan, Zhuhai (CN); SHAO, Zhe, Zhuhai (CN)
(74) Representative: Sun, Yiming

(56) References cited:
- CN-B- 102 387 285
- US-A1- 2005 147 424
- US-A1- 2023 224 424

## Description

### TECHNICAL FIELD

The application relates to the field of image forming technology, and in particular to a method for forming a color correction pattern and an image forming device.

### BACKGROUND

Image forming devices may be configured to form images on image carriers, such as common printers, copiers, etc. Here, the performance of the image forming device directly determines the quality of the image. For example, a color printer is configured to form a color image on an image carrier. To improve the quality of the color image, the color printer needs to perform color concentration correction before printing. During the concentration correction process, the color printer adjusts the different levels of developing voltage to control the four colors (KCMY) of the photosensitive drum to form four color correction patterns on the image carrier, wherein the four color correction patterns may respectively include a plurality of color blocks of different color concentration levels, and the color blocks of different color concentration levels correspond to different levels of developing voltage, and the concentration data of each color block may be used to complete the concentration correction.

In the existing technologies method for forming a color correction pattern for concentration correction, four color photosensitive drums usually form 6 to 10 color blocks of different color concentration levels on the image carrier. In order to reduce costs, the four color photosensitive drums use the same high-voltage power supply on a low-cost color printer. In terms of controlling the development voltage, the high-voltage power supply may simultaneously control the development voltage of the four color photosensitive drums. And limited by the positions of the four photosensitive drums, during the color correction process, along the carrier conveying direction, the interval between the corresponding position color blocks of the color correction pattern of the four colors needs to be the same as the distance between the photosensitive drums of the corresponding colors. Therefore, limited by the fact that the development voltage of the photosensitive drum shares a high voltage, and because of the limitation of the circuit technology of the shared development high voltage, and the distance between the photosensitive drums, when the color correction pattern of each color includes multiple color blocks, the color blocks of the color correction patterns of multiple colors cannot be placed on the same page. Generally, the correction pattern is distributed on at least 2 pages or more, which prolongs the color correction time.

US2005/0147424 A1 discloses density and misregistration control in a tandem image-forming apparatus using optical detection of toner/reference patterns.

### SUMMARY

In view of the foregoing, embodiments of the present disclosure provide a method for forming a color correction pattern and an image forming device, which is configured to reduce the number of pages of an image carrier on which the color correction pattern is imaged, thereby reducing the time for color correction.

In a first aspect, a method for forming a color correction pattern is provided. The method is applied to an image forming device, where the image forming device includes a first image forming unit and a second image forming unit, where the first image forming unit and the second image forming unit are powered by the same power supply, and the method includes: controlling the first image forming unit to form a first-color correction pattern on an image carrier, and controlling the second image forming unit to form a second-color correction pattern on the image carrier, where the two sides of the image carrier perpendicular to the carrier conveying direction are respectively a first imaging area and a second imaging area, the first-color correction pattern is imaged in the first imaging area, and the second-color correction pattern is imaged in the second imaging area.

In the first aspect, the image forming device further includes a third image forming unit and a fourth image forming unit, and the first image forming unit, the second image forming unit, the third image forming unit, and the fourth image forming unit are powered by the same power supply; and where controlling the first image forming unit to form a first-color correction pattern on an image carrier and controlling the second image forming unit to form a second-color correction pattern on an image carrier includes controlling a developing voltage of the power supply so that the first image forming unit forms the first-color correction pattern on the image carrier, the second image forming unit forms the second-color correction pattern on the image carrier, the third image forming unit forms a third-color correction pattern on the image carrier, and the fourth image forming unit forms a fourth-color correction pattern on the image carrier, where the first-color correction pattern and the third-color correction pattern are sequentially imaged in the first imaging area along the carrier conveying direction, and the second-color correction pattern and the fourth-color correction pattern are sequentially imaged in the second imaging area along the carrier conveying direction.

In the first aspect, the first-color correction pattern includes a plurality of first-color blocks, the second-color correction pattern includes a plurality of second-color blocks, the third-color correction pattern includes a plurality of third-color blocks, the fourth-color correction pattern includes a plurality of fourth-color blocks, and the first-color blocks, the second-color blocks, the third-color blocks, and the fourth-color blocks have a plurality of color concentration levels, where a first-color block, a second-color block, a third-color block, and a fourth-color block having the same color concentration level correspond to a same developing voltage.

In the first aspect, the first-color correction pattern includes M of first-color blocks, the second-color correction pattern includes M of second-color blocks, the third-color correction pattern includes M of third-color blocks, and the fourth-color correction pattern includes M of fourth-color blocks, where a N-th first-color block, a N-th second-color block, a N-th third-color block, and a N-th fourth-color block have the same color concentration level, a distance between the N-th first-color block and the N-th second-color block in the carrier conveying direction is equal to a distance between the first image forming unit and the second image forming unit; a distance between the N-th second-color block and the N-th third-color block in the carrier conveying direction is equal to the distance between the second image forming unit and the third image forming unit, and a distance between N-th third-color block and the N-th fourth-color block in the carrier conveying direction is equal to a distance between the third image forming unit and the fourth image forming unit, where M and N are both natural numbers greater than 1, and M is greater than or equal to N.

In an optional embodiment, at least two of the distance between the first image forming unit and the second image forming unit, the distance between the second image forming unit and the third image forming unit, and the distance between the third image forming unit and the fourth image forming unit are equal.

In an optional embodiment, the distance between the first image forming unit and the second image forming unit, the distance between the second image forming unit and the third image forming unit, and the distance between the third image forming unit and the fourth image forming unit are not equal.

In an optional embodiment, in the carrier conveying direction, the M of first-color blocks and the M of third-color blocks have a same arrangement order, where the arrangement order is determined by the color concentration level; and/or, in the carrier conveying direction, M of second-color blocks and M of fourth-color blocks have the same arrangement order, where the arrangement order is determined by the color concentration level.

In an optional embodiment, the arrangement order is determined by the color concentration level, specifically, in the carrier conveying direction, the color concentration levels are arranged from high to low.

In an optional embodiment, among the M of first-color blocks, the M of second-color blocks, the M of third-color blocks, and the M of fourth-color blocks, a distance between adjacent color blocks is positively correlated with a duration of the development voltage.

A second aspect provides an image forming device, including: a processor, a first image forming unit and a second image forming unit, where the first image forming unit and the second image forming unit are powered by the same power supply; the processor is configured to control the first image forming unit to form a first-color correction pattern on the image carrier, and control the second image forming unit to form a second-color correction pattern on the image carrier; and two sides of the image carrier perpendicular to the carrier conveying direction are respectively a first imaging area and a second imaging area, the first-color correction pattern is imaged in the first imaging area, and the second-color correction pattern is imaged in the second imaging area.

In the second aspect, the image forming device further includes a third image forming unit and a fourth image forming unit, where the first image forming unit, the second image forming unit, the third image forming unit and the fourth image forming unit are powered by the same power supply; and the processor is configured to control the developing voltage of the power supply so that the first image forming unit forms a first-color correction pattern on the image carrier, the second image forming unit forms a second-color correction pattern on the image carrier, the third image forming unit forms a third-color correction pattern on the image carrier, and the fourth image forming unit forms a fourth-color correction pattern on the image carrier; and the first-color correction pattern and the third-color correction pattern are sequentially imaged in the first imaging area along the carrier conveying direction, and the second-color correction pattern and the fourth-color correction pattern are sequentially imaged in the second imaging area along the carrier conveying direction.

In the second aspect, the processor is for executing the program instructions, wherein: the image forming device comprising a memory storing computer program instructions, wherein when the computer program instructions are executed by the processor, the image forming device executes the method for forming a color correction pattern in the first aspect or any optional embodiment of the first aspect.

A fourth aspect provides a computer-readable storage medium, which includes a stored program, where when the program is executed, the image forming device where the computer-readable storage medium is located is controlled to execute the method for forming a color correction pattern in the first aspect or any optional embodiment of the first aspect.

A fifth aspect provides a computer program product, including a computer program/instruction, which, when executed by a processor, implements the method for forming a color correction pattern in the first aspect or any optional embodiment of the first aspect.

In the technical solution of the embodiments of the present disclosure, the first-color correction pattern and the second-color correction pattern are respectively imaged on the first imaging area and the second imaging area on two sides of the image carrier perpendicular to the carrier conveying direction, thereby reducing the number of pages of the image carrier on which the color correction pattern is imaged, thereby reducing the color correction time, and further reducing the startup time of the entire image forming device, thereby improving the user experience.

### BRIEF DESCRIPTION OF THE DRAWINGS

To more clearly illustrate the technical solutions of the embodiments of the present disclosure, the drawings essential for use in the embodiments will be briefly introduced below. Obviously, the drawings described below are merely some embodiments of the present disclosure. For ordinary technicians in this field, other drawings may be obtained based on these drawings without paying creative labor.
FIG. 1 is a schematic diagram of a color correction pattern in accordance with an embodiment of the present disclosure;
FIG. 2A is a cross-sectional schematic diagram of an image forming unit and a transfer belt in in accordance with an embodiment of the present disclosure;
FIG. 2B is another cross-sectional schematic diagram of the image forming unit and the transfer belt in accordance with an embodiment of the present disclosure;
FIG. 3 is a schematic diagram of another color correction pattern in accordance with an embodiment of the present disclosure;
FIG. 4 is a schematic diagram of a distance between a K-color block and a M-color block in accordance with an embodiment of the present disclosure;
FIG. 5 is a schematic diagram of another color correction pattern in accordance with an embodiment of the present disclosure;
FIG. 6 is a schematic diagram of another color correction pattern in accordance with an embodiment of the present disclosure;
FIG. 7 is a schematic diagram of another color correction pattern in accordance with an embodiment of the present disclosure;
FIG. 8 is a schematic diagram of another color correction pattern in accordance with an embodiment of the present disclosure; and
FIG. 9 is a schematic diagram of an image forming device in accordance with an embodiment of the present disclosure.

### DETAILED DESCRIPTION

To better understand the technical solution of the present disclosure, the embodiments of the present disclosure are described in detail hereinafter with reference to the accompanying drawings.

It should be clear that the described embodiments are merely part of the embodiments of the present disclosure, rather than all the embodiments. Based on the embodiments in the present disclosure, all other embodiments obtained by a person skilled in the art without creative work are within the scope of protection of the present disclosure.

The terms used in the embodiments of the present disclosure are merely for the purpose of describing specific embodiments and are not intended to limit the present disclosure. The singular forms "a", "said" and "the" used in the embodiments of the present disclosure and the appended claims are also intended to include plural forms, unless the context clearly indicates other meanings.

It should be understood that the term "and/or" used in the disclosure is merely a description of the association relationship of associated objects, indicating that there may be three relationships. For example, A and/or B may represent: A exists alone, A and B exist at the same time, and B exists alone. In addition, the character "/" in the disclosure generally indicates that the associated objects before and after are in an "or" relationship.

In the existing technologies, the developing voltages of the four image forming units are controlled by a common high-voltage power supply. Due to the limitation of the circuit technology of the shared developing high voltage, a large number of color blocks cannot be placed on the same page in the current technology. Generally, the correction pattern is distributed to 2 pages or more. Take the color blocks of 6 different color concentration levels in the color correction pattern of different colors as an example, one arrangement of the color correction pattern is as follows: four photosensitive drums form 4 groups of first-color correction patterns at corresponding positions of the image carrier, and the first-color correction pattern includes 6 color blocks of different color concentration levels. The 6 color blocks of different color concentration levels all correspond to the first page, that is, the 6 color blocks of different color concentration levels may be formed on the same page of the image carrier. However, due to the limited space, the first-color correction pattern of a single photosensitive drum may correspond to the same page, but it cannot satisfy that the first-color correction patterns of the four photosensitive drums all correspond to the same page. Another arrangement of the color correction pattern is as follows: 6 color blocks are divided into a first part and a second part of different color concentration levels, wherein the first part corresponds to the first page, and the second part corresponds to the second page, that is, the 4 color blocks of different color concentration levels of the first part formed by the four photosensitive drums on the image carrier correspond to the first page, and the 2 color blocks of different color concentration levels of the second part correspond to the second page. In this case, the first part and the second part of the first-color correction pattern cannot be formed on the same page of the image carrier. For example, taking K color as an example, the K color photosensitive drums respectively form 4 color blocks of different color concentration levels corresponding to the first part of the first page and 2 color blocks of different color concentration levels corresponding to the second part of the second page. The above two common arrangements of color correction patterns are limited by the positions of the four photosensitive drums, and the color correction patterns of the four colors may only be printed on one side of the image carrier. Therefore, the length of the color correction patterns of the four colors must be 2 pages or more to complete the color correction. Since the length of the color correction patterns of the four colors is too long, the time for color correction is prolonged, thereby extending the startup time of the entire printer.

In order to solve the above technical problems, the embodiments of the present disclosure provide a method for forming a color correction pattern and an image forming device. The image forming device may include a processor, a first image forming unit and a second image forming unit, where the first image forming unit and the second image forming unit are powered by the same power supply. The processor may control the first image forming unit to form a first-color correction pattern on the image carrier, and control the second image forming unit to form a second-color correction pattern on the image carrier. The two sides of the image carrier perpendicular to the carrier conveying direction are respectively the first imaging area and the second imaging area, the first-color correction pattern is imaged on the first imaging area, and the second-color correction pattern is imaged on the second imaging area. It can be seen that in the embodiments of the present disclosure, the first-color correction pattern and the second-color correction pattern are respectively imaged on the first imaging area and the second imaging area on the two sides of the image carrier perpendicular to the carrier conveying direction, which reduces the number of pages of the image carrier on which the color correction patterns are imaged, thereby reducing the time for color correction, and further reducing the startup time of the entire image forming device, thereby improving the user experience.

In the embodiments of the present disclosure, examples of image forming devices include inkjet printers, laser printers, light emitting diode (LED) printers, copiers or multifunction all-in-one fax machines, and multifunction peripherals (MFP) that perform the above functions in a single device. The image forming device includes a processor and an image forming unit, where the processor is configured to control the image forming device as a whole, and the image forming unit is configured to form an image on a transported image carrier under the control of the processor based on image forming data and a developer such as a toner stored in a consumable. For example, the image forming unit may include a photosensitive drum or a powder cartridge, and the powder cartridge discussed here is a device including a photosensitive drum and a powder cartridge.

The embodiments of the present disclosure provide a method for forming a color correction pattern, which is applied to an image forming device, the image forming device including a first image forming unit and a second image forming unit, and the first image forming unit and the second image forming unit being powered by the same power supply. The method includes controlling the first image forming unit to form a first-color correction pattern on an image carrier, and controlling the second image forming unit to form a second-color correction pattern on the image carrier. The image carrier has two sides perpendicular to the carrier conveying direction, namely a first imaging area and a second imaging area, the first-color correction pattern is imaged in the first imaging area, and the second-color correction pattern is imaged in the second imaging area.

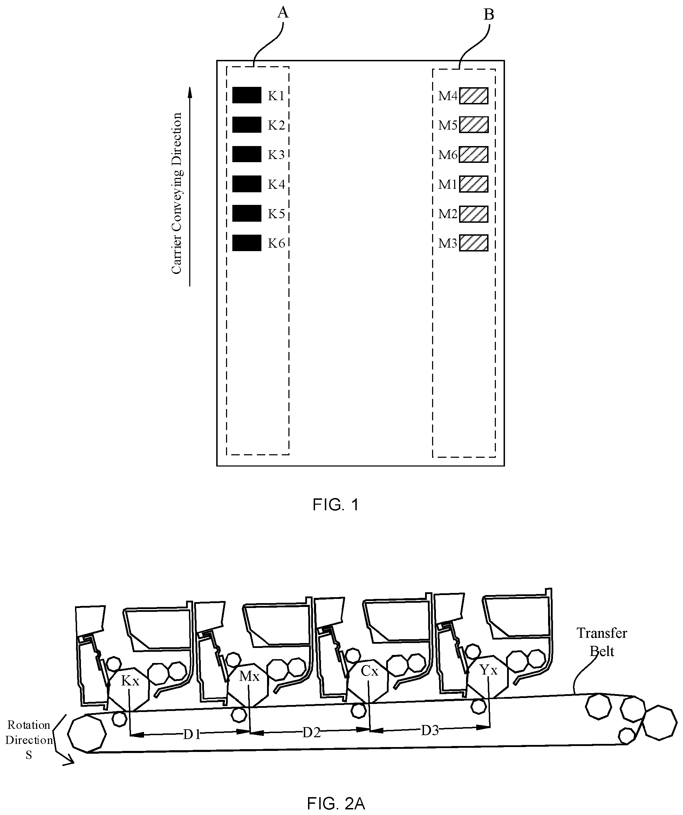

In the embodiments of the present disclosure, the color correction pattern is a pattern used to correct the color density of an image formed by the image forming device, and the color correction pattern may include multiple color blocks, and the color blocks are sub-patterns that constitute the color correction pattern. Correcting the developing voltage is an important point in color correction. Correcting the developing voltage may make the color depth of the image printed on the image carrier in a suitable state during normal printing. Therefore, it is required to form color blocks with different color density levels through different developing voltages to confirm the color state of the current image forming device, thereby realizing the correction of the developing voltage. Specifically, different color blocks show different color depths based on the different developing voltages used, that is, different color blocks have different color density levels. The image forming device may include a toner concentration sensor corresponding to the transfer belt. The toner concentration sensor may perform optical reflection detection on the color correction pattern printed on the image carrier feeding on the transfer belt, convert the detected light signal into an electrical signal, and provide the electrical signal to the firmware of the image forming device to realize the correction of the developing voltage. Here, the image carrier may be an imaging medium, such as paper. FIG. 1 is a schematic diagram of a color correction pattern in accordance with an embodiment of the present disclosure. As shown in FIG. 1, the two sides of the image carrier perpendicular to the carrier conveying direction are respectively the first imaging area A and the second imaging area B. The first-color correction pattern is imaged in the first imaging area A, and the second-color correction pattern is imaged in the second imaging area B. Here, the color of the first-color correction pattern is the first color, and the color of the second-color correction pattern is the second color. For example, when the image forming device can print in the printing four-color separation mode (CMYK), the first color may be black (Black, K) and the second color may be magenta (Magenta, M). In practical applications, the first color and the second color may also be other colors, which are not listed here one by one.

In an embodiment of the present disclosure, the first-color correction pattern and the second-color correction pattern are respectively imaged on the first imaging area and the second imaging area on both sides of the image carrier perpendicular to the carrier conveying direction, thereby reducing the number of pages of the image carrier on which the color correction patterns are imaged, thereby reducing the color correction time, and further reducing the startup time of the entire image forming device, thereby improving the user experience.

The embodiments of the present disclosure also provide a method for forming a color correction pattern, which is applied to an image forming device, and the image forming device includes a first image forming unit, a second image forming unit, a third image forming unit, and a fourth image forming unit. The first image forming unit, the second image forming unit, the third image forming unit, and the fourth image forming unit are powered by the same power supply. Then the method includes: controlling the developing voltage of the power supply so that the first image forming unit forms a first-color correction pattern on the image carrier, the second image forming unit forms a second-color correction pattern on the image carrier, the third image forming unit forms a third-color correction pattern on the image carrier, and the fourth image forming unit forms a fourth-color correction pattern on the image carrier. The first-color correction pattern and the third-color correction pattern are sequentially imaged in the first imaging area along the carrier conveying direction, and the second-color correction pattern and the fourth-color correction pattern are sequentially imaged in the second imaging area along the carrier conveying direction.

In the embodiments of the present disclosure, the first-color correction pattern includes a plurality of first-color blocks, the second-color correction pattern includes a plurality of second-color blocks, the third-color correction pattern includes a plurality of third-color blocks, the fourth-color correction pattern includes a plurality of fourth-color blocks, and the first-color block, the second-color block, the third-color block, and the fourth-color block all have a plurality of color concentration levels. The first-color block, the second-color block, the third-color block, and the fourth-color block having the same color concentration level have the same corresponding development voltage.

In the embodiments of the present disclosure, the color of the first-color correction pattern is the first color, the color of the second-color correction pattern is the second color, the color of the third-color correction pattern is the third color, and the color of the fourth-color correction pattern is the fourth color. Then, the first-color correction pattern may include a plurality of first-color blocks of the first color, the second-color correction pattern includes a plurality of second-color blocks of the second color, the third-color correction pattern includes a plurality of third-color blocks of the third color, and the fourth-color correction pattern includes a plurality of fourth-color blocks of the fourth color. As an optional solution, the image forming device may use a printing four-color (CMYK) separation mode for printing. For example, the first color may be black (K), the second color may be magenta (M), the third color may be cyan (C), and the fourth color may be yellow (Y). In practical applications, the first to fourth colors may also be other colors, which are not listed here one by one.

As an optional solution, the first-color correction pattern and the second-color correction pattern are at least partially correspondingly arranged in a direction perpendicular to the carrier conveying direction, and the third-color correction pattern and the fourth-color correction pattern are at least partially correspondingly arranged in a direction perpendicular to the carrier conveying direction.

In an embodiment of the present disclosure, color correction patterns of four colors are formed on an image carrier, where a first-color correction pattern and a third-color correction pattern are sequentially imaged in a first imaging area along a carrier conveying direction, and a second-color correction pattern and a fourth-color correction pattern are sequentially imaged in a second imaging area along a carrier conveying direction. The color correction patterns of four colors are respectively arranged on both sides of the image carrier perpendicular to the carrier conveying direction, thereby reducing the number of pages of the image carrier on which the color correction patterns are imaged, thereby reducing the time for color correction.

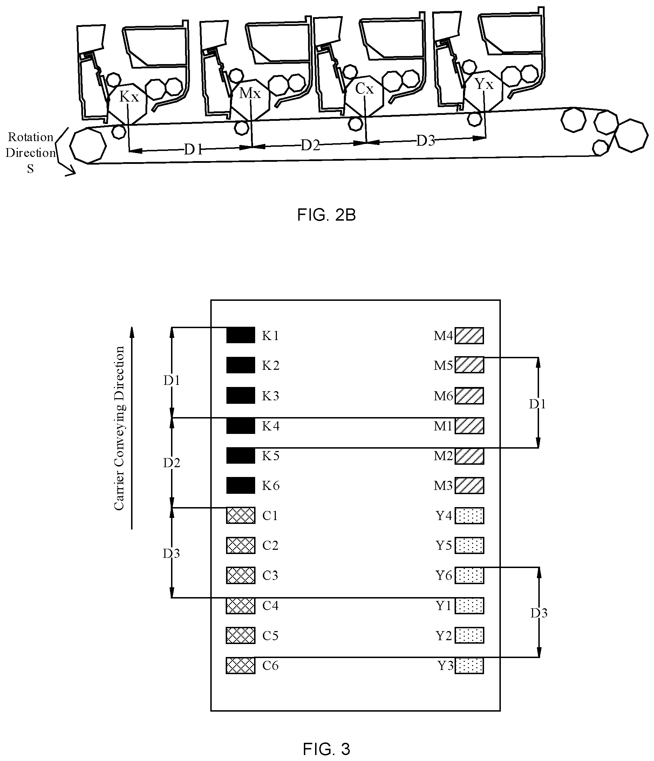

FIG. 2A is a schematic cross-sectional view of an image forming unit and a transfer belt in an embodiment of the present disclosure, and FIG. 2B is another schematic cross-sectional view of an image forming unit and a transfer belt in an embodiment of the present disclosure. As shown in FIG. 2A and FIG. 2B, for example, the image forming device includes a first image forming unit Kx, a second image forming unit Mx, a third image forming unit Cx, and a fourth image forming unit Yx. The transfer belt rotates in a rotation direction S so that the transfer belt drives the image carrier to sequentially pass through the fourth image forming unit Yx, the third image forming unit Cx, the second image forming unit Mx, and the first image forming unit Kx. Therefore, in accordance with the rotation direction S, the fourth image forming unit Yx, the third image forming unit Cx, the second image forming unit Mx, and the first image forming unit Kx are sequentially arranged above the transfer belt. The first image forming unit Kx is configured to form a plurality of first-color blocks of K color, the second image forming unit Mx is configured to form a plurality of second-color blocks of M color, the third image forming unit Cx is configured to form a plurality of third-color blocks of C color, and the fourth image forming unit Yx is configured to form a plurality of fourth-color blocks of Y color.

In the embodiments of the present disclosure, the first-color correction pattern includes M of first-color blocks, the second-color correction pattern includes M of second-color blocks, the third-color correction pattern includes M of third-color blocks, and the fourth-color correction pattern includes M of fourth-color blocks. The color concentration levels of the N-th first-color block, the N-th second-color block, the N-th third-color block, and the N-th fourth-color block are the same. The distance between the N-th first-color block and the N-th second-color block in the carrier conveying direction is equal to the distance between the first image forming unit Kx and the second image forming unit Mx, the distance between the N-th second-color block and the N-th third-color block in the carrier conveying direction is equal to the distance between the second image forming unit Mx and the third image forming unit Cx, and the distance between the N-th third-color block and the N-th fourth-color block in the carrier conveying direction is equal to the distance between the third image forming unit Cx and the fourth image forming unit Yx. M and N are both natural numbers greater than 1, and M is greater than or equal to N.

In the embodiments of the present disclosure, at least two of the distance D1 between the first image forming unit Kx and the second image forming unit Mx, the distance D2 between the second image forming unit Mx and the third image forming unit Cx, and the distance D3 between the third image forming unit Cx and the fourth image forming unit Yx are equal or unequal. As an optional solution, as shown in FIG. 2A, D1, D2, and D3 are all equal, that is, D1 = D2 = D3. As another optional solution, as shown in FIG. 2B, D1, D2, and D3 are all unequal, that is, D1 ≠ D2 ≠ D3.

In the embodiments of the present disclosure, the distances between different image forming units may be partially equal, all equal, or all unequal, so that the method for forming the color correction pattern in the embodiments of the present disclosure may be applied to image forming devices of different structures, thereby improving the application scope of the technical solution provided in the embodiments of the present disclosure.

In the embodiments of the present disclosure, the first-color block, the second-color block, the third-color block and the fourth-color block with the same color density level have the same developing voltage. The multiple image forming units in the image forming device are all powered by the same power supply, and the power supply may output the same developing voltage to different image forming units during imaging to control different image forming units to form color blocks with the same color density level in color correction patterns of different colors. Here, the power supply may be a high-voltage power supply. For example, the first image forming unit Kx, the second image forming unit Mx, the third image forming unit Cx and the fourth image forming unit Yx may form the N-th first-color block, the N-th second-color block, the N-th third-color block and the N-th fourth-color block with the same color density level on the image carrier under the control of the same level of developing voltage output by the power supply, so that the N-th first-color block of the first-color correction pattern, the N-th second-color block of the second-color correction pattern, the N-th third-color block of the third-color correction pattern and the N-th fourth-color block of the fourth correction pattern have the same color density level, and then the color blocks of different colors have the same color density level by setting the same developing voltage.

The power supply may output different levels of developing voltages, and different levels of developing voltages may be used to form color blocks with different color density levels. Table 1 shows the corresponding relationship between the developing voltage levels and the color blocks.

**Table 1**

| Developing voltage level | Level 1 | Level 2 | Level 3 | Level 4 | Level 5 | Level 6 |
|---|---|---|---|---|---|---|
| Developing voltage value | 100 V | 200 V | 300 V | 400 V | 500 V | 600 V |
| Corresponding color blocks | K1, M1, C1, Y1 | K2, M2, C2, Y2 | K3, M3, C3, Y3 | K4, M4, C4, Y4 | K5, M5, C5, Y5 | K6, M6, C6, Y6 |

in Table 1 above, Table 1 shows six levels of developing voltage and the color blocks corresponding to each level of developing voltage. For example, the developing voltage level may include Level 1, Level 2, and Level 3, Level 4, Level 5 and Level 6, the developing voltage value of Level 1 is 100 V, the developing voltage value of Level 2 is 200 V, the developing voltage value of Level 3 is 300 V, the developing voltage value of Level 4 is 400 V, the developing voltage value of Level 5 is 500 V, and the developing voltage value of Level 6 is 600 V. The development voltage of Level 1 is used to form the first first-color block K1 of the first-color correction pattern, the first second-color block M1 of the second-color correction pattern, the first third-color block C1 of the third-color correction pattern, and the first fourth-color block Y1 of the fourth-color correction pattern. By analogy, the development voltage of Level 6 is used to form the sixth first-color block K6 of the first-color correction pattern, the sixth second-color block M6 of the second-color correction pattern, the sixth third-color block C6 of the third-color correction pattern, and the sixth fourth-color block Y6 of the fourth-color correction pattern.

In the embodiments of the present disclosure, the distance between the N-th first-color block of the first-color correction pattern and the N-th second-color block of the second-color correction pattern in the carrier conveying direction, the distance between the N-th second-color block of the second-color correction pattern and the N-th third-color block of the third-color correction pattern in the carrier conveying direction, and the distance between the N-th third-color block of the third-color correction pattern and the N-th fourth-color block of the fourth-color correction pattern in the carrier conveying direction are respectively the same as the distances between the respective image forming units, thereby ensuring that the N-th color blocks of all colors may be formed under the correct development voltage.

In an optional embodiment, FIG. 3 is a schematic diagram of another color correction pattern in accordance an embodiment of the present disclosure. As shown in FIG. 3, four color correction patterns are formed on the image carrier, and the four color correction patterns include a first-color correction pattern of K color, a second-color correction pattern of M color, a third-color correction pattern of C color, and a fourth-color correction pattern of Y color. Here, the first-color correction pattern includes 6 first-color blocks of K color, and the 6 first-color blocks of K color may include first-color blocks K1 to K6. The second-color correction pattern includes 6 second-color blocks of M color, and the 6 second-color blocks of M color include second-color blocks M1 to M6. The third-color correction pattern includes 6 third-color blocks of C color, and the 6 third-color blocks of C color include third-color blocks C1 to C6. The fourth-color correction pattern includes 6 fourth-color blocks of Y color, and the 6 fourth-color blocks of Y color include fourth-color blocks Y1 to Y6.

As shown in FIG. 3, K1 to K6 and C1 to C6 are disposed in the first imaging area of the image carrier, the first imaging area is located on the left side of the image carrier, the first imaging area may refer to FIG. 1, and FIG. 3 is not specifically drawn. C1 to C6 are located on the side of K1 to K6 opposite to the carrier conveying direction, that is, the first-color correction pattern (K1 to K6) and the third-color correction pattern (C1 to C6) are sequentially imaged in the first imaging area along the carrier conveying direction. M1 to M6 and Y1 to Y6 are located in the second imaging area of the image carrier, the second imaging area is located on the right side of the image carrier, the second imaging area may refer to FIG. 1, and FIG. 3 is not specifically drawn., Y1 to Y6 are located on the side of M1 to M6 opposite to the carrier conveying direction, that is, the second-color correction pattern (M1 to M6) and the fourth-color correction pattern (Y1 to Y6) are sequentially imaged in the second imaging area along the carrier conveying direction.

In the embodiments of the present disclosure, in the carrier conveying direction, M first-color blocks and M third-color blocks have the same arrangement order, where the arrangement order is determined by the color concentration level; and/or, in the carrier conveying direction, M second-color blocks and M fourth-color blocks have the same arrangement order, where the arrangement order is determined by the color concentration level. As shown in FIG. 3, M = 6, in the carrier conveying direction, the 6 first-color blocks of K color and the 6 third-color blocks of C color have the same arrangement order, and the arrangement order of the 6 first-color blocks of K color is: K6, K5, K4, K3, K2, K1, and the arrangement order of the 6 third-color blocks of C color is: C6, C5, C4, C3, C2, C1. As shown in FIG. 3, M = 6. In the carrier conveying direction, the 6 second-color blocks of M color and the 6 fourth-color blocks of Y color have the same arrangement order. The arrangement order of the 6 second-color blocks of M color is: M3, M2, M1, M6, M5, M4, and the arrangement order of the 6 fourth-color blocks of Y color is: Y3, Y2, Y1, Y6, Y5, Y4.

In the direction perpendicular to the carrier conveying direction, the color correction pattern imaged in the first imaging area and the color correction pattern imaged in the second imaging area are all arranged in correspondence. As shown in FIG. 3, in the direction perpendicular to the carrier conveying direction, the first-color blocks in the first-color correction pattern and the second-color blocks in the second-color correction pattern are arranged in correspondence one by one. Specifically, K1 and M4 are arranged in correspondence, K2 and M5 are arranged in correspondence, K3 and M6 are arranged in correspondence, K4 and M1 are arranged in correspondence, K5 and M2 are arranged in correspondence, and K6 and M3 are arranged in correspondence. The third-color blocks in the third-color correction pattern and the fourth-color blocks in the fourth-color correction pattern are arranged in correspondence one by one. Specifically, C1 and Y4 are arranged in correspondence, C2 and Y5 are arranged in correspondence, C3 and Y6 are arranged in correspondence, C4 and Y1 are arranged in correspondence, C5 and Y2 are arranged in correspondence, and C6 and Y3 are arranged in correspondence.

As shown in FIGS. 2A and 3, the distance between K1 and M1 is D1, and the distance between the first image forming unit Kx and the second image forming unit Mx is D1. Therefore, the distance between K1 and M1 is equal to the distance between the first image forming unit Kx and the second image forming unit Mx. Similarly, the distance between K6 and M6 is D1, and the distance between the first image forming unit Kx and the second image forming unit Mx is D1. Therefore, the distance between K6 and M6 is equal to the distance between the first image forming unit Kx and the second image forming unit Mx.

As shown in FIGS. 2A and 3, the distance between M1 and C1 is D2, and the distance between the second image forming unit Mx and the second image forming unit Cx is D2. Therefore, the distance between M1 and C1 is equal to the distance between the second image forming unit Mx and the second image forming unit Cx. Similarly, the distance between M6 and C6 is D2, and the distance between the second image forming unit Mx and the second image forming unit Cx is D2. Therefore, the distance between M6 and C6 is equal to the distance between the second image forming unit Mx and the second image forming unit Cx.

As shown in FIGS. 2A and 3, the distance between C1 and Y1 is D3, and the distance between the second image forming unit Cx and the second image forming unit Yx is D3. Therefore, the distance between C1 and Y1 is equal to the distance between the second image forming unit Cx and the second image forming unit Yx. Similarly, the distance between C6 and Y6 is D3, and the distance between the second image forming unit Cx and the second image forming unit Yx is D3. Therefore, the distance between C6 and Y6 is equal to the distance between the second image forming unit Cx and the second image forming unit Yx.

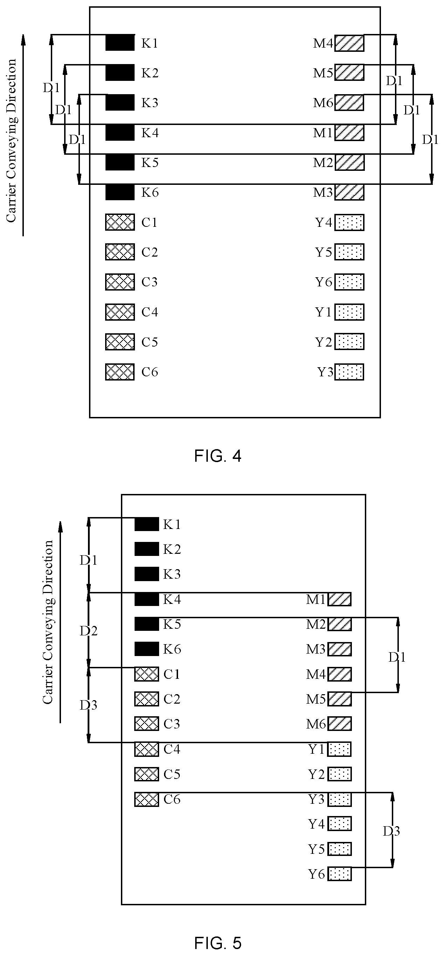

FIG. 4 is a schematic diagram of the distance between the K-color blocks and the M-color blocks in the embodiments of the present disclosure. As shown in FIG. 4, the distance between Kn and Mn is D1, for example, n = 1 to 6. Specifically, the distance between K1 and M1 is D1, the distance between K2 and M2 is D1, the distance between K3 and M3 is D1, the distance between K4 and M4 is D1, the distance between K5 and M5 is D1, and the distance between K6 and M6 is D1. Similarly, the distance between Mn and Cn is D2, and the distance between Cn and Yn is D3. These two situations are not specifically drawn in the figure. And as shown in FIG. 1 and FIG. 3, D1 = D2 = D3.

As shown in FIG. 2A, FIG. 3 and Table 1, when forming K1, M1, C1, and Y1, the power supply may output a development voltage of 100 V of Level 1 to the first image forming unit Kx, the second image forming unit Mx, the third image forming unit Cx, and the fourth image forming unit Yx to form K1, M1, C1, and Y1 on the image carrier. Therefore, K1, M1, C1, and Y1 correspond to the development voltage of 100 V of Level 1. When forming K2, M2, C2, and Y2, the power supply may output a development voltage of 200 V of Level 2 to the first image forming unit Kx, the second image forming unit Mx, the third image forming unit Cx, and the fourth image forming unit Yx to form K2, M2, C2, and Y2 on the image carrier. Therefore, K2, M2, C2, and Y2 correspond to the development voltage of 200 V of Level 2. Similarly, when forming K6, M6, C6, and Y6, the power supply may output a development voltage of 600 V of Level 6 to the first image forming unit Kx, the second image forming unit Mx, the third image forming unit Cx, and the fourth image forming unit Yx to form K6, M6, C6, and Y6 on the image carrier. Therefore, K6, M6, C6, and Y6 correspond to a development voltage of 600 V of Level 6.

As shown in FIG. 2A, according to the rotation direction S of the transfer belt, the transfer belt drives the image carrier to sequentially pass through the fourth image forming unit Yx, the third image forming unit Cx, the second image forming unit Mx and the first image forming unit Kx, and the color correction pattern formed on the image carrier may be seen in FIG. 3. In an optional embodiment, the imaging sequence of each color block in FIG. 3 may be: the power supply outputs a development voltage of Level 4 to the second image forming unit Mx and the fourth image forming unit Yx, so that M4 and Y4 are imaged on the image carrier at the same time; the power supply outputs a development voltage of Level 5 to the second image forming unit Mx and the fourth image forming unit Yx, so that M5 and Y5 are imaged on the image carrier at the same time; the power supply outputs a development voltage of Level 6 to the second image forming unit Mx and the fourth image forming unit Yx, so that M6 and Y6 are imaged on the image carrier at the same time; the power supply outputs a development voltage of Level 1 to the first image forming unit Kx, the second image forming unit Mx, the third image forming unit Cx and the fourth image forming unit Yx, so that K1, M1, C1 and Y1 are imaged on the image carrier at the same time; the power supply outputs a development voltage of Level 2 to the first image forming unit Kx, the second image forming unit Mx, the third image forming unit Cx and the fourth image forming unit Yx, so that K2, M2, C2, and Y2 are imaged on the image carrier at the same time; the power supply outputs a developing voltage of Level 3 to the first image forming unit Kx, the second image forming unit Mx, the third image forming unit Cx and the fourth image forming unit Yx, so that K3, M3, C3 and Y3 are imaged on the image carrier at the same time; the power supply outputs a developing voltage of Level 4 to the first image forming unit Kx and the third image forming unit Cx, so that K4 and C4 are imaged on the image carrier at the same time; the power supply outputs a developing voltage of Level 5 to the first image forming unit Kx and the third image forming unit Cx, so that K5 and C5 are imaged on the image carrier at the same time; and the power supply outputs a developing voltage of Level 6 to the first image forming unit Kx and the third image forming unit Cx, so that K6 and C6 are imaged on the image carrier at the same time.

In another optional embodiment, FIG. 5 is a schematic diagram of another color correction pattern in accordance with an embodiment of the present disclosure. As shown in FIG. 5, the difference from the embodiment shown in FIG. 3 is that the arrangement order of the second-color blocks of M color and the arrangement order of the third-color blocks of Y color in the illustrated embodiment in FIG. 5 are different from those in the illustrated embodiment in FIG. 3.

In the embodiment disclosed herein, in the carrier conveying direction, M of first-color blocks and M of third-color blocks have the same arrangement order, where the arrangement order is determined by the color concentration level; and/or, in the carrier conveying direction, M of second-color blocks and M of fourth-color blocks have the same arrangement order, where the arrangement order is determined by the color concentration level. As shown in FIG. 5, M = 6, in the carrier conveying direction, the 6 first-color blocks of K color and the 6 third-color blocks of C color have the same arrangement order, and the arrangement order of the 6 first-color blocks of K color is: K6, K5, K4, K3, K2, K1, and the arrangement order of the 6 third-color blocks of C color is: C6, C5, C4, C3, C2, C1. As shown in FIG. 5, M = 6. In the carrier conveying direction, the 6 second-color blocks of M color and the 6 fourth-color blocks of Y color have the same arrangement order. The arrangement order of the 6 second-color blocks of M color is: M6, M5, M4, M3, M2, M1, and the arrangement order of the 6 fourth-color blocks of Y color is: Y6, Y5, Y4, Y3, Y2, Y1.

Here, in the carrier conveying direction, the color blocks are arranged in order from high to low according to the color concentration level. As shown in FIG. 5, among the six first-color blocks, the color concentration levels of K6, K5, K4, K3, K2, and K1 are from high to low, so K6, K5, K4, K3, K2, and K1 are arranged in order from high to low according to the color concentration levels. Among the six third-color blocks, the color concentration levels of C6, C5, C4, C3, C2, and C1 are from high to low, so C6, C5, C4, C3, C2, and C1 are arranged in order from high to low according to the color concentration levels. Among the six second-color blocks, the color concentration levels of M6, M5, M4, M3, M2, and M1 are from high to low, so M6, M5, M4, M3, M2, and M1 are arranged in order from high to low according to the color concentration levels. Among the six fourth-color blocks, the color concentration levels of Y6, Y5, Y4, Y3, Y2, and Y1 are from high to low, so Y6, Y5, Y4, Y3, Y2, and Y1 are arranged in order from high to low according to the color concentration levels.

In the embodiments of the present disclosure, the arrangement order of the color blocks may be determined by the color concentration level, so that the image forming unit may form the color blocks in sequence on the image carrier according to the color concentration level.

In the direction perpendicular to the carrier conveying direction, the color correction pattern imaged in the first imaging area is arranged correspondingly to the color correction pattern imaged in the second imaging area. As shown in FIG. 5, in the direction perpendicular to the carrier conveying direction, the first-color block in the first-color correction pattern is arranged correspondingly to the second-color block in the second-color correction pattern. Specifically, K4 is arranged correspondingly to M1, K5 is arranged correspondingly to M2, and K6 is arranged correspondingly to M3. The third-color block in the third-color correction pattern is arranged correspondingly to the fourth-color block in the fourth-color correction pattern. Specifically, C4 is arranged correspondingly to Y1, C5 is arranged correspondingly to Y2, and C6 is arranged correspondingly to Y3. In addition, as shown in FIG. 5, C1 is arranged correspondingly to M4, C2 is arranged correspondingly to M5, and C3 is arranged correspondingly to M6.

As shown in FIG. 5, the distance between Kn and Mn is D1, the distance between Mn and Cn is D2, and the distance between Cn and Yn is D3, where n = 1 to 6, and D1 = D2 = D3.

As shown in FIG. 2A, according to the rotation direction S of the transfer belt, the transfer belt drives the image carrier to sequentially pass through the fourth image forming unit Yx, the third image forming unit Cx, the second image forming unit Mx and the first image forming unit Kx, and the color correction pattern formed on the image carrier may be seen in FIG. 5. In an optional embodiment, the imaging sequence of each color block in FIG. 5 may be: the power supply outputs a development voltage of Level 1 to the first image forming unit Kx, the second image forming unit Mx, the third image forming unit Cx and the fourth image forming unit Yx, so that K1, M1, C1 and Y1 are imaged on the image carrier at the same time; the power supply outputs a development voltage of Level 2 to the first image forming unit Kx, the second image forming unit Mx, the third image forming unit Cx and the fourth image forming unit Yx, so that K2, M2, C2 and Y2 are imaged on the image carrier at the same time; the power supply outputs a development voltage of Level 3 to the first image forming unit Kx, the second image forming unit Mx, the third image forming unit Cx and the fourth image forming unit Yx, so that K3, M3, C3 and Y3 are imaged on the image carrier at the same time; the power supply outputs a development voltage of Level 4 to the first image forming unit Kx, the second image forming unit Mx, the third image forming unit Cx and the fourth image forming unit Yx, so that K4, M4, C4, and Y4 are imaged on the image carrier at the same time; the power supply outputs a developing voltage of Level 5 to the first image forming unit Kx, the second image forming unit Mx, the third image forming unit Cx, and the fourth image forming unit Yx, so that K5, M5, C5, and Y5 are imaged on the image carrier at the same time; the power supply outputs a developing voltage of Level 6 to the first image forming unit Kx, the second image forming unit Mx, the third image forming unit Cx, and the fourth image forming unit Yx, so that K6, M6, C6, and Y6 are imaged on the image carrier at the same time.

The rest of the description of the color correction pattern shown in FIG. 5 may refer to the embodiment shown in FIG. 3, and will not be repeated here.

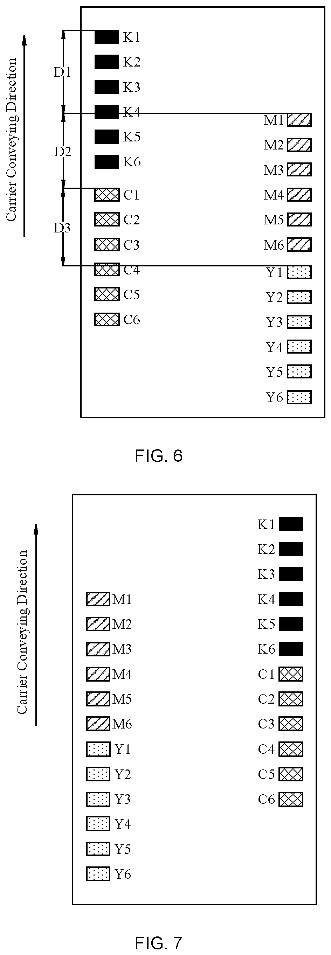

In another optional embodiment, FIG. 6 is a schematic diagram of another color correction pattern in accordance with an embodiment of the present disclosure. As shown in FIG. 2 and FIG. 6, the difference from the embodiment shown in FIG. 5 is that, in the embodiment shown in FIG. 6, D1≠D2≠D3.

Specifically, the distance D1 between the first image forming unit Kx and the second image forming unit Mx, the distance D2 between the second image forming unit Mx and the third image forming unit Cx, and the distance D3 between the third image forming unit Cx and the fourth image forming unit Yx are not equal. Accordingly, in the color correction pattern, the distance between each color block of each color will be adjusted accordingly, but the distance between Kn and Mn is still kept at D1, the distance between Mn and Cn is kept at D2, and the distance between Cn and Yn is kept at D3.

The rest of the description of the color correction pattern shown in FIG. 6 may refer to the embodiment shown in FIG. 5, and will not be repeated here.

In another optional embodiment, FIG. 7 is a schematic diagram of another color correction pattern in accordance with an embodiment of the present disclosure. As shown in FIG. 7, the difference from the embodiment shown in FIG. 5 is that, in the embodiment shown in FIG. 7, the first imaging area is located on the right side of the image carrier, and the second imaging area is located on the left side of the image carrier. Accordingly, the first-color correction pattern (K1 to K6) and the third-color correction pattern (C1 to C6) are located on the right side of the image carrier, and the second-color correction pattern (M1 to M6) and the fourth-color correction pattern (Y1 to Y6) are located on the left side of the image carrier.

As shown in FIG. 7, the first-color blocks of K color (K1 to K6) and the third-color blocks of C color (C1 to C6) are located on the right side of the image carrier, and the second-color blocks of M color (M1 to M6) and the fourth-color blocks of Y color (Y1 to Y6) are located on the left side of the image carrier.

In the embodiments of the present disclosure, for the schemes of FIGS. 3, 6 and 8 described below, the first-color block of K color and the third-color block of C color may also be set on the right side of the image carrier, and the second-color block of M color and the fourth-color block of Y color may be set on the left side of the image carrier. The above situation is not specifically drawn in the figure.

The rest of the description of the color correction pattern shown in FIG. 7 may refer to the embodiment shown in FIG. 5, and will not be repeated here.

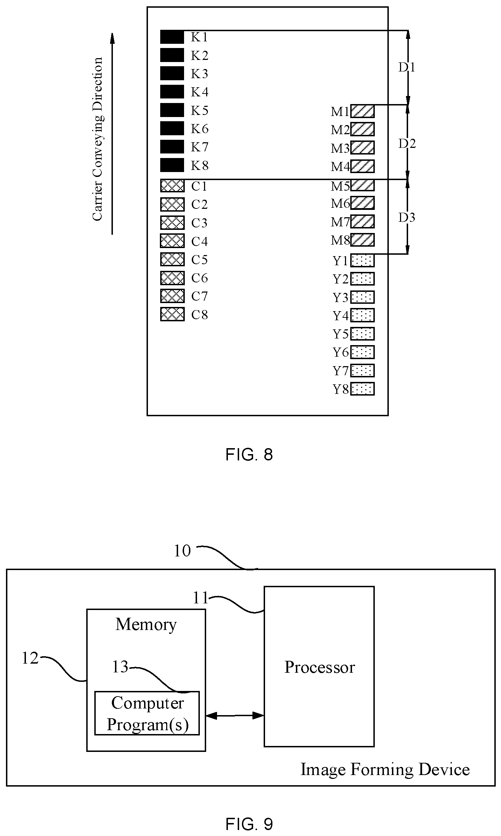

In another optional embodiment, FIG. 8 is a schematic diagram of another color correction pattern in accordance with an embodiment of the present disclosure. As shown in FIG. 8, the difference from the embodiment shown in FIG. 5 is that in the embodiment shown in FIG. 8, the distance between each color block is shortened in the first-color correction pattern, the second-color correction pattern, the third-color correction pattern, and the fourth-color correction pattern, so that the color correction pattern of each color may include more color blocks.

For example, as shown in FIG. 8, the first-color correction pattern includes 8 first-color blocks of K color, and the 8 first-color blocks of K color may include first-color blocks K1 to K8; the second-color correction pattern includes 8 second-color blocks of M color, and the 8 second-color blocks of M color include second-color blocks M1 to M8; the third-color correction pattern includes 8 third-color blocks of C color, and the 8 third-color blocks of C color include third-color blocks C1 to C8; and the fourth-color correction pattern includes 8 fourth-color blocks of Y color, and the 8 fourth-color blocks of Y color include fourth-color blocks Y1 to Y8.

In FIG. 8, the distance between Kn and Mn remains D1, the distance between Mn and Cn remains D2, and the distance between Cn and Yn remains D3, where n = 1 to 8.

In the embodiments of the present disclosure, the color correction pattern of each color may also include other numbers of color blocks, which is not limited in the embodiments of the present disclosure.

In the embodiments of the present disclosure, for the schemes of FIGS. 3, 6 and 7 above, the distance between each color block in the first-color correction pattern, the second-color correction pattern, the third-color correction pattern and the fourth-color correction pattern may also be shortened, so that the color correction pattern of each color may include more color blocks, and the above situation is not specifically drawn in the figures.

The rest of the description of the color correction pattern shown in FIG. 8 may refer to the illustrated embodiment in FIG. 5, and will not be repeated here.

In the embodiments disclosed herein, in the first-color correction pattern, the second-color correction pattern, the third-color correction pattern and the fourth-color correction pattern, there is sufficient space between the multiple color blocks of each color correction pattern during design to shorten the spacing between the color blocks, so that more color blocks may be set in the color correction pattern of each color. It is sufficient to ensure that the distance between Kn and Mn is still maintained at D1, the distance between Mn and Cn is still maintained at D2, and the distance between Cn and Yn is still maintained at D3. The distance between the color blocks of each color correction pattern is not fixed, and the distance between the color blocks of the color correction pattern of the same color is adjustable. After the adjustment, more color blocks may be disposed in the color correction pattern of each color. To dispose more color blocks in the color correction pattern of each color, the designer may limit the spacing between the color blocks in each color correction pattern.

As an optional solution, among M of first-color blocks, M of second-color blocks, M of third-color blocks and M of fourth-color blocks, the distance between adjacent color blocks is positively correlated with the duration of the developing voltage. The longer the duration of the developing voltage, the greater the distance between adjacent color blocks of the same color. For example, for M of first-color blocks in the first-color correction pattern, the longer the duration of the developing voltage, the greater the distance between adjacent first-color blocks in M of first-color blocks; for M of second-color blocks in the second-color correction pattern, the longer the duration of the developing voltage, the greater the distance between adjacent second-color blocks in M of second-color block; for M of third-color blocks in the third-color correction pattern, the longer the duration of the developing voltage, the greater the distance between adjacent third-color blocks in M of third-color blocks; for M of fourth-color blocks in the fourth-color correction pattern, the longer the duration of the developing voltage, the greater the distance between adjacent fourth-color blocks in M of fourth-color blocks. Thus, the distance between color blocks is adjusted by adjusting the duration of the developing voltage.

In the technical solution of the embodiments of the present disclosure, the developing voltage of the power supply is controlled so that the first image forming unit forms a first-color correction pattern on the image carrier, the second image forming unit is controlled to form a second-color correction pattern on the image carrier, and the third image forming unit is controlled to form a third-color correction pattern on the image carrier, and the fourth image forming unit is controlled to form a fourth-color correction pattern on the image carrier. The first-color correction pattern and the third-color correction pattern are sequentially imaged in the first imaging area along the carrier conveying direction, and the second-color correction pattern and the fourth-color correction pattern are sequentially imaged in the second imaging area along the carrier conveying direction. In the embodiments of the present disclosure, the color correction patterns of four colors are respectively arranged in the first imaging area and the second imaging area on both sides of the image carrier perpendicular to the carrier conveying direction, thereby reducing the number of pages of the image carrier on which the color correction patterns are imaged, thereby reducing the time for color correction, and further reducing the startup time of the entire image forming device, thereby improving the user experience.

In the embodiments of the present disclosure, since the color correction patterns of four colors are respectively arranged in the first imaging area and the second imaging area on both sides of the image carrier perpendicular to the carrier conveying direction, the color correction patterns may be detected by the toner concentration sensors arranged on the left and right sides. For example, the toner concentration sensor on the left detects the color correction pattern set in the first imaging area, and the toner concentration sensor on the right detects the color correction pattern set in the second imaging area, thereby reducing the number of pages of the image carrier on which the color correction pattern is imaged and shortening the length of the color correction pattern.

An embodiment of the present disclosure provides an image forming device, which includes a processor, a first image forming unit, and a second image forming unit, where the first image forming unit and the second image forming unit are powered by the same power supply.

The processor is configured to control the first image forming unit to form a first-color correction pattern on the image carrier and control the second image forming unit to form a second-color correction pattern on the image carrier. The image carrier has two sides perpendicular to the carrier conveying direction, namely a first imaging area and a second imaging area. The first-color correction pattern is imaged in the first imaging area, and the second-color correction pattern is imaged in the second imaging area.

In an optional embodiment, the image forming device further includes: a third image forming unit and a fourth image forming unit, where the first image forming unit, the second image forming unit, the third image forming unit and the fourth image forming unit are powered by the same power supply. The processor is configured to control the developing voltage of the power supply so that the first image forming unit forms a first-color correction pattern on the image carrier, the second image forming unit forms a second-color correction pattern on the image carrier, the third image forming unit forms a third-color correction pattern on the image carrier, and the fourth image forming unit forms a fourth-color correction pattern on the image carrier. The first-color correction pattern and the third-color correction pattern are sequentially imaged in the first imaging area along the carrier conveying direction, and the second-color correction pattern and the fourth-color correction pattern are sequentially imaged in the second imaging area along the carrier conveying direction.

An embodiment of the present disclosure provides a computer-readable storage medium, which includes a stored program, where when the program is executed, an image forming device where the computer-readable storage medium is located is controlled to execute the above-described methods for forming a color correction pattern.

The embodiments of the present disclosure provide a computer program product, and when the computer program/instructions are executed by a processor, the methods for forming the color correction pattern are implemented.

An embodiment of the present disclosure provides an image forming device, including: one or more processors; a memory; and one or more computer programs, where the one or more computer programs are stored in the memory, and the one or more computer programs include instructions that, when executed by the image forming device, enable the image forming device to perform the above described methods for forming a color correction pattern.

FIG. 9 is a schematic diagram of an image forming device in accordance with an embodiment of the present disclosure. As shown in FIG. 9, the image forming device 10 disclosed herein includes: a processor 11, a memory 12, and a computer program(s) 13 stored in the memory 11 and executable on the processor 11. When the computer program(s) 13 is executed by the processor 11, the methods for forming a color correction pattern in the disclosed embodiments are implemented. To avoid repetition, the details are not described one by one here.

The image forming device 10 includes, but is not limited to, a processor 11 and a memory 12. Those skilled in the art will appreciate that FIG. 9 is merely an example of the image forming device 10 and does not limit the image forming device 10. The image forming device 10 may include more or fewer components than those shown in the figure, or may combine certain components, or may include different components. For example, the image forming device 10 may also include input and output devices, network access devices, buses, and the like.

The processor 11 may be a central processing unit (CPU), or other general-purpose processors, digital signal processors (DSP), application-specific integrated circuits (ASIC), field-programmable gate arrays (FPGA) or other programmable logic devices, discrete gate or transistor logic devices, discrete hardware components, etc. A general-purpose processor may be a microprocessor or any conventional processor, etc.

The memory 12 may be an internal storage unit of the image forming device 10, such as a hard disk or memory of the image forming device 10. The memory 12 may also be an external storage device of the image forming device 10, such as a plug-in hard disk, a smart media card (SMC), a secure digital (SD) card, a flash card, and the like installed on the image forming device 10. Further, the memory 12 may also include both an internal storage unit of the image forming device 10 and an external storage device. The memory 12 is configured to store computer programs and other programs and data required by network devices. The memory 12 may also be configured to temporarily store data that has been output or is to be output.

Those skilled in the art may clearly understand that, for the convenience and brevity of description, the specific working processes of the systems, devices and units described above may refer to the corresponding processes in the above-described method embodiments and will not be repeated here.

In the specific embodiments provided in the present disclosure, it should be understood that the disclosed systems, devices and methods may be implemented in other ways. For example, the device embodiments described above are merely schematic. For example, the division of the units is merely a logical function division. There may be other division methods in actual implementation. For example, multiple units or components may be combined or integrated into another system, or some features may be ignored or not executed. Another point is that the mutual coupling or direct coupling or communication connection shown or discussed may be an indirect coupling or communication connection through some interfaces, devices or units, which may be electrical, mechanical or other forms.

The units described as separate components may or may not be physically separated, and the components shown as units may or may not be physical units, that is, these components or units may be located in one place or distributed on multiple network units. Some or all the units may be selected according to actual needs to achieve the purpose of the solution of the disclosed embodiments.

In addition, each functional unit in each embodiment of the present disclosure may be integrated into one processing unit, or each unit may exist physically separately, or two or more units may be integrated into one unit. The above-described integrated unit may be implemented in the form of hardware or in the form of hardware plus software functional units.

The above-described integrated units implemented in the form of a software functional unit may be stored in a computer-readable storage medium. The above-described software functional unit is stored in a computer-readable storage medium, including a number of instructions for a computer device (which may be a personal computer, a server, or a network device, etc.) or a processor to perform some steps of the method described in each embodiment of the present disclosure. The computer-readable storage medium includes U disk, mobile hard disk, read-only memory (ROM), random access memory (RAM), disk or optical disk and other media that may store program codes.

## Claims

1. A method for forming a color correction pattern, wherein the method is applied to an image forming device, the image forming device includes a first image forming unit (Kx) and a second image forming unit (Mx), the first image forming unit and the second image forming unit are powered by a same power supply, and the method comprises:
controlling the first image forming unit to form a first-color correction pattern (K1 to K6, K1 to K8) on an image carrier, and controlling the second image forming unit to form a second-color correction pattern (M1 to M6, M1 to M8) on the image carrier,
wherein the image carrier includes a first imaging area (A) and a second imaging area (B) disposed on two sides along a direction perpendicular to a carrier conveying direction respectively, the first-color correction pattern is imaged in the first imaging area, and the second-color correction pattern is imaged in the second imaging area;
wherein the image forming device further includes a third image forming unit (Cx) and a fourth image forming unit (Yx), and the first image forming unit, the second image forming unit, the third image forming unit and the fourth image forming unit are powered by the same power supply, and wherein controlling the first image forming unit to form the first-color correction pattern on the image carrier and the controlling the second image forming unit to form the second-color correction pattern on the image carrier comprises:
controlling a developing voltage of the power supply so that the first image forming unit forms the first-color correction pattern on the image carrier, the second image forming unit forms the second-color correction pattern on the image carrier, the third image forming unit forms a third-color correction pattern (C1 to C6, C1 to C8) on the image carrier, and the fourth image forming unit forms a fourth-color correction pattern (Y1 to Y6, Y1 to Y8) on the image carrier,
wherein the first-color correction pattern and the third-color correction pattern are sequentially imaged in the first imaging area along the carrier conveying direction, and the second-color correction pattern and the fourth-color correction pattern are sequentially imaged in the second imaging area along the carrier conveying direction;
wherein:
the first-color correction pattern includes a plurality of first-color blocks, the second-color correction pattern includes a plurality of second-color blocks, the third-color correction pattern includes a plurality of third-color blocks, the fourth-color correction pattern includes a plurality of fourth-color blocks, and the first-color blocks, the second-color blocks, the third-color blocks and the fourth-color blocks have a plurality of color concentration levels; and
a first-color block, a second-color block, a third-color block, and a fourth-color block that have a same color concentration level correspond to a same developing voltage;
**characterised in that** the first-color correction pattern includes M of first-color blocks, the second-color correction pattern includes M of second-color blocks, the third-color correction pattern includes M of third-color blocks, and the fourth-color correction pattern includes M of fourth-color blocks, and a N-th first-color block, a N-th second-color block, a N-th third-color block, and a N-th fourth-color block have the same color concentration level;
a distance (D1) between the N-th first-color block and the N-th second-color block in the carrier conveying direction is equal to a distance between the first image forming unit and the second image forming unit;
a distance (D2) between the N-th second-color block and the N-th third-color block in the carrier conveying direction is equal to a distance between the second image forming unit and the third image forming unit; and
a distance (D3) between the N-th third-color block and the N-th fourth-color block in the carrier conveying direction is equal to a distance between the third image forming unit and the fourth image forming unit,
wherein M and N are natural numbers greater than 1, and M is greater than or equal to N.

2. The method according to claim 1, wherein at least two of the distance between the first image forming unit and the second image forming unit, the distance between the second image forming unit and the third image forming unit, and the distance between the third image forming unit and the fourth image forming unit are equal.

3. The method according to claim 1, wherein the distance between the first image forming unit and the second image forming unit, the distance between the second image forming unit and the third image forming unit, and the distance between the third image forming unit and the fourth image forming unit are not equal.

4. The method according to claim 1, wherein:
in the carrier conveying direction, M of first-color blocks and the M of third-color blocks have a same arrangement order, wherein the arrangement order is determined by color concentration level; and/or,
in the carrier conveying direction, M of second-color blocks and M of fourth-color blocks have a same arrangement order, wherein the arrangement order is determined by color concentration level.

5. The method according to claim 4, wherein the arrangement order is determined by color concentration level includes that in the carrier conveying direction, the color concentration levels are arranged from high to low.

6. The method according to claim 1, wherein a distance between adjacent color blocks among M of first-color blocks, M of second-color blocks, M of third-color blocks and M of fourth-color blocks is positively correlated with a duration of the developing voltage.

7. An image forming device (10), comprising:
a processor (11); and
a first image forming unit (Kx) and a second image forming unit (Mx), wherein the first image forming unit and the second image forming unit are powered by a same power supply,
wherein the processor is configured to control the first image forming unit to form a first-color correction pattern (K1 to K6, K1 to K8) on an image carrier, and control the second image forming unit to form a second-color correction pattern (M1 to M6, M1 to M8) on the image carrier, and
wherein the image carrier includes a first imaging area (A) and a second imaging area (B) disposed on two sides along a direction perpendicular to a carrier conveying direction respectively, the first-color correction pattern is imaged in the first imaging area, and the second-color correction pattern is imaged in the second imaging area.
wherein:
the image forming device further includes a third image forming unit (Cx) and a fourth image forming unit (Yx), wherein the first image forming unit, the second image forming unit, the third image forming unit and the fourth image forming unit are powered by the same power supply;
the processor is configured to control a developing voltage of the power supply so that the first image forming unit forms the first-color correction pattern on the image carrier, the second image forming unit forms the second-color correction pattern on the image carrier, the third image forming unit forms a third-color correction pattern (C1 to C6, C1 to C8) on the image carrier, and the fourth image forming unit forms a fourth-color correction pattern (Y1 to Y6, Y1 to Y8) on the image carrier; and
the first-color correction pattern and the third-color correction pattern are sequentially imaged in the first imaging area along the carrier conveying direction, and the second-color correction pattern and the fourth-color correction pattern are sequentially imaged in the second imaging area along the carrier conveying direction;
the processor is for executing the program instructions (13), wherein: the image forming device comprising a memory (12) storing computer program instructions, wherein when the computer program instructions are executed by the processor, the image forming device executes the method for forming a color correction pattern according to any one of claims 1 to 6.

8. A computer-readable storage medium, comprising a stored program, wherein when the program is executed, an image forming device (10) where the computer-readable storage medium is located is controlled to execute the method for forming a color correction pattern according to any one of claims 1 to 6.

9. A computer program product, comprising a computer program/instruction (13), wherein the computer program/instruction, when executed by a processor (11) of an image forming device, implements the method for forming a color correction pattern according to any one of claims 1 to 6.

## Patentansprüche

1. Verfahren zum Bilden eines Farbkorrekturmusters, wobei das Verfahren auf eine Bildformungsvorrichtung angewendet wird, die Bildformungsvorrichtung eine erste Bildformungseinheit (Kx) und eine zweite Bildformungseinheit (Mx) umfasst, die erste Bildformungseinheit und die zweite Bildformungseinheit durch dieselbe Stromversorgung mit Energie versorgt werden, und das Verfahren umfasst:
Steuern der ersten Bildformungseinheit zum Bilden eines Korrekturmusters der ersten Farbe (K1 bis K6, K1 bis K8) auf einem Bildträger, und Steuern der zweiten Bildformungseinheit zum Bilden eines Korrekturmusters der zweiten Farbe (M1 bis M6, M1 bis M8) auf dem Bildträger,
wobei der Bildträger einen ersten Bildgebungsbereich (A) und einen zweiten Bildgebungsbereich (B) umfasst, die entlang einer Richtung senkrecht zu einer Förderrichtung des Bildträgers jeweils auf einer der beiden Seiten angeordnet sind, das Korrekturmuster der ersten Farbe in dem ersten Bildgebungsbereich abgebildet wird und das Korrekturmuster der zweiten Farbe in dem zweiten Bildgebungsbereich abgebildet wird;
wobei die Bildformungsvorrichtung ferner eine dritte Bildformungseinheit (Cx) und eine vierte Bildformungseinheit (Yx) umfasst und die erste Bildformungseinheit, die zweite Bildformungseinheit, die dritte Bildformungseinheit und die vierte Bildformungseinheit durch dieselbe Stromversorgung mit Energie versorgt werden, und wobei das Steuern der ersten Bildformungseinheit zum Bilden des Korrekturmusters der ersten Farbe auf dem Bildträger und das Steuern der zweiten Bildformungseinheit zum Bilden des Korrekturmusters der zweiten Farbe auf dem Bildträger umfasst:
Steuern einer Entwicklungsspannung der Stromversorgung, so dass die erste Bildformungseinheit das Korrekturmuster der ersten Farbe auf dem Bildträger bildet, die zweite Bildformungseinheit das Korrekturmuster der zweiten Farbe auf dem Bildträger bildet, die dritte Bildformungseinheit ein Korrekturmuster der dritten Farbe (C1 bis C6, C1 bis C8) auf dem Bildträger bildet und die vierte Bildformungseinheit ein Korrekturmuster der vierten Farbe (Y1 bis Y6, Y1 bis Y8) auf dem Bildträger bildet, wobei das Korrekturmuster der ersten Farbe und das Korrekturmuster der dritten Farbe entlang der Förderrichtung des Bildträgers nacheinander in dem ersten Bildgebungsbereich abgebildet werden und das Korrekturmuster der zweiten Farbe und das Korrekturmuster der vierten Farbe entlang der Förderrichtung des Bildträgers nacheinander in dem zweiten Bildgebungsbereich abgebildet werden;
wobei:
das Korrekturmuster der ersten Farbe eine Mehrzahl von Blöcken der ersten Farbe umfasst, das Korrekturmuster der zweiten Farbe eine Mehrzahl von Blöcken der zweiten Farbe umfasst, das Korrekturmuster der dritten Farbe eine Mehrzahl von Blöcken der dritten Farbe umfasst, das Korrekturmuster der vierten Farbe eine Mehrzahl von Blöcken der vierten Farbe umfasst und die Blöcke der ersten Farbe, die Blöcke der zweiten Farbe, die Blöcke der dritten Farbe und die Blöcke der vierten Farbe eine Mehrzahl von Farbkonzentrationsstufen aufweisen; und
ein Block der ersten Farbe, ein Block der zweiten Farbe, ein Block der dritten Farbe und ein Block der vierten Farbe, die dieselbe Farbkonzentrationsstufe aufweisen, derselben Entwicklungsspannung entsprechen;
**dadurch gekennzeichnet, dass**
das Korrekturmuster der ersten Farbe M Blöcke der ersten Farbe umfasst, das Korrekturmuster der zweiten Farbe M Blöcke der zweiten Farbe umfasst, das Korrekturmuster der dritten Farbe M Blöcke der dritten Farbe umfasst und das Korrekturmuster der vierten Farbe M Blöcke der vierten Farbe umfasst, und ein N-ter Block der ersten Farbe, ein N-ter Block der zweiten Farbe, ein N-ter Block der dritten Farbe und ein N-ter Block der vierten Farbe dieselbe Farbkonzentrationsstufe aufweisen;
ein Abstand (D1) zwischen dem N-ten Block der ersten Farbe und dem N-ten Block der zweiten Farbe in der Förderrichtung des Bildträgers gleich einem Abstand zwischen der ersten Bildformungseinheit und der zweiten Bildformungseinheit ist;
ein Abstand (D2) zwischen dem N-ten Block der zweiten Farbe und dem N-ten Block der dritten Farbe in der Förderrichtung des Bildträgers gleich einem Abstand zwischen der zweiten Bildformungseinheit und der dritten Bildformungseinheit ist; und
ein Abstand (D3) zwischen dem N-ten Block der dritten Farbe und dem N-ten Block der vierten Farbe in der Förderrichtung des Bildträgers gleich einem Abstand zwischen der dritten Bildformungseinheit und der vierten Bildformungseinheit ist,
wobei M und N natürliche Zahlen größer als 1 sind und M größer als oder gleich N ist.

2. Verfahren nach Anspruch 1, wobei von dem Abstand zwischen der ersten Bildformungseinheit und der zweiten Bildformungseinheit, dem Abstand zwischen der zweiten Bildformungseinheit und der dritten Bildformungseinheit und dem Abstand zwischen der dritten Bildformungseinheit und der vierten Bildformungseinheit mindestens zwei gleich sind.

3. Verfahren nach Anspruch 1, wobei der Abstand zwischen der ersten Bildformungseinheit und der zweiten Bildformungseinheit, der Abstand zwischen der zweiten Bildformungseinheit und der dritten Bildformungseinheit und der Abstand zwischen der dritten Bildformungseinheit und der vierten Bildformungseinheit nicht gleich sind.

4. Verfahren nach Anspruch 1, wobei:
in der Förderrichtung des Bildträgers die M Blöcke der ersten Farbe und die M Blöcke der dritten Farbe dieselbe Anordnungsreihenfolge aufweisen, wobei die Anordnungsreihenfolge durch die Farbkonzentrationsstufe bestimmt wird; und/oder,
in der Förderrichtung des Bildträgers die M Blöcke der zweiten Farbe und die M Blöcke der vierten Farbe dieselbe Anordnungsreihenfolge aufweisen, wobei die Anordnungsreihenfolge durch die Farbkonzentrationsstufe bestimmt wird.

5. Verfahren nach Anspruch 4, wobei die Bestimmung der Anordnungsreihenfolge durch die Farbkonzentrationsstufe umfasst, dass die Farbkonzentrationsstufen in der Förderrichtung des Bildträgers von hoch nach niedrig angeordnet sind.

6. Verfahren nach Anspruch 1, wobei ein Abstand zwischen benachbarten Blöcken unter den M Blöcken der ersten Farbe, den M Blöcken der zweiten Farbe, den M Blöcken der dritten Farbe und den M Blöcken der vierten Farbe positiv mit einer Dauer der Entwicklungsspannung korreliert ist.

7. Bildformungsvorrichtung (10), umfassend:
einen Prozessor (11); und
eine erste Bildformungseinheit (Kx) und eine zweite Bildformungseinheit (Mx), wobei die erste Bildformungseinheit und die zweite Bildformungseinheit durch dieselbe Stromversorgung mit Energie versorgt werden,
wobei der Prozessor eingerichtet ist, die erste Bildformungseinheit zum Bilden eines Korrekturmusters der ersten Farbe (K1 bis K6, K1 bis K8) auf einem Bildträger zu steuern und die zweite Bildformungseinheit zum Bilden eines Korrekturmusters der zweiten Farbe (M1 bis M6, M1 bis M8) auf dem Bildträger zu steuern, und
wobei der Bildträger einen ersten Bildgebungsbereich (A) und einen zweiten Bildgebungsbereich (B) umfasst, die entlang einer Richtung senkrecht zu einer Förderrichtung des Bildträgers jeweils auf einer der beiden Seiten angeordnet sind, das Korrekturmuster der ersten Farbe in dem ersten Bildgebungsbereich abgebildet wird und das Korrekturmuster der zweiten Farbe in dem zweiten Bildgebungsbereich abgebildet wird.
wobei:
die Bildformungsvorrichtung ferner eine dritte Bildformungseinheit (Cx) und eine vierte Bildformungseinheit (Yx) umfasst, wobei die erste Bildformungseinheit, die zweite Bildformungseinheit, die dritte Bildformungseinheit und die vierte Bildformungseinheit durch dieselbe Stromversorgung mit Energie versorgt werden;
der Prozessor eingerichtet ist, eine Entwicklungsspannung der Stromversorgung so zu steuern, dass die erste Bildformungseinheit das Korrekturmuster der ersten Farbe auf dem Bildträger bildet, die zweite Bildformungseinheit das Korrekturmuster der zweiten Farbe auf dem Bildträger bildet, die dritte Bildformungseinheit ein Korrekturmuster der dritten Farbe (C1 bis C6, C1 bis C8) auf dem Bildträger bildet und die vierte Bildformungseinheit ein Korrekturmuster der vierten Farbe (Y1 bis Y6, Y1 bis Y8) auf dem Bildträger bildet; und
das Korrekturmuster der ersten Farbe und das Korrekturmuster der dritten Farbe entlang der Förderrichtung des Bildträgers nacheinander in dem ersten Bildgebungsbereich abgebildet werden und das Korrekturmuster der zweiten Farbe und das Korrekturmuster der vierten Farbe entlang der Förderrichtung des Bildträgers nacheinander in dem zweiten Bildgebungsbereich abgebildet werden;
der Prozessor zum Ausführen der Programmanweisungen (13) dient, wobei: die Bildformungsvorrichtung einen Speicher (12) umfasst, der Computerprogrammanweisungen speichert, wobei die Bildformungsvorrichtung, wenn die Computerprogrammanweisungen durch den Prozessor ausgeführt werden, das Verfahren zum Bilden eines Farbkorrekturmusters nach einem der Ansprüche 1 bis 6 ausführt.

8. Computerlesbares Speichermedium, umfassend ein gespeichertes Programm, wobei, wenn das Programm ausgeführt wird, eine Bildformungsvorrichtung (10), in der sich das computerlesbare Speichermedium befindet, so gesteuert wird, dass sie das Verfahren zum Bilden eines Farbkorrekturmusters nach irgendeinem der Ansprüche 1 bis 6 ausführt.

9. Computerprogrammprodukt, umfassend ein Computerprogramm/eine Computeranweisung (13), wobei das Computerprogramm/die Computeranweisung, wenn das Computerprogramm/die Computeranweisung durch einen Prozessor (11) einer Bildformungsvorrichtung ausgeführt wird, das Verfahren zum Bilden eines Farbkorrekturmusters nach irgendeinem der Ansprüche 1 bis 6 implementiert.

## Revendications

1. Procédé de formation d'un motif de correction de couleur, dans lequel le procédé est appliqué à un dispositif de formation d'image, le dispositif de formation d'image comprend une première unité de formation d'image (Kx) et une deuxième unité de formation d'image (Mx), la première unité de formation d'image et la deuxième unité de formation d'image sont alimentées par une même alimentation électrique, et le procédé comprend :
commander la première unité de formation d'image pour former un motif de correction de première couleur (K1 à K6, K1 à K8) sur un support d'image, et commander la deuxième unité de formation d'image pour former un motif de correction de deuxième couleur (M1 à M6, M1 à M8) sur le support d'image,
dans lequel le support d'image comprend une première zone d'imagerie (A) et une deuxième zone d'imagerie (B) disposées respectivement sur deux côtés le long d'une direction perpendiculaire à une direction de transport du support d'image, le motif de correction de première couleur est imagé dans la première zone d'imagerie, et le motif de correction de deuxième couleur est imagé dans la deuxième zone d'imagerie ;
dans lequel le dispositif de formation d'image comprend en outre une troisième unité de formation d'image (Cx) et une quatrième unité de formation d'image (Yx), et la première unité de formation d'image, la deuxième unité de formation d'image, la troisième unité de formation d'image et la quatrième unité de formation d'image sont alimentées par la même alimentation électrique, et dans lequel le fait de commander la première unité de formation d'image pour former le motif de correction de première couleur sur le support d'image et de commander la deuxième unité de formation d'image pour former le motif de correction de deuxième couleur sur le support d'image comprend :
commander une tension de développement de l'alimentation électrique de sorte que la première unité de formation d'image forme le motif de correction de première couleur sur le support d'image, la deuxième unité de formation d'image forme le motif de correction de deuxième couleur sur le support d'image, la troisième unité de formation d'image forme un motif de correction de troisième couleur (C1 à C6, C1 à C8) sur le support d'image, et la quatrième unité de formation d'image forme un motif de correction de quatrième couleur (Y1 à Y6, Y1 à Y8) sur le support d'image,
dans lequel le motif de correction de première couleur et le motif de correction de troisième couleur sont imagés successivement dans la première zone d'imagerie le long de la direction de transport du support d'image, et le motif de correction de deuxième couleur et le motif de correction de quatrième couleur sont imagés successivement dans la deuxième zone d'imagerie le long de la direction de transport du support d'image ;
dans lequel :
le motif de correction de première couleur comprend une pluralité de blocs de première couleur, le motif de correction de deuxième couleur comprend une pluralité de blocs de deuxième couleur, le motif de correction de troisième couleur comprend une pluralité de blocs de troisième couleur, le motif de correction de quatrième couleur comprend une pluralité de blocs de quatrième couleur, et les blocs de première couleur, les blocs de deuxième couleur, les blocs de troisième couleur et les blocs de quatrième couleur présentent une pluralité de niveaux de concentration de couleur ; et
un bloc de première couleur, un bloc de deuxième couleur, un bloc de troisième couleur et un bloc de quatrième couleur qui présentent un même niveau de concentration de couleur correspondent à une même tension de développement ;
**caractérisé en ce que**
le motif de correction de première couleur comprend M blocs de première couleur, le motif de correction de deuxième couleur comprend M blocs de deuxième couleur, le motif de correction de troisième couleur comprend M blocs de troisième couleur, et le motif de correction de quatrième couleur comprend M blocs de quatrième couleur, et un N-ième bloc de première couleur, un N-ième bloc de deuxième couleur, un N-ième bloc de troisième couleur et un N-ième bloc de quatrième couleur présentent le même niveau de concentration de couleur ;
une distance (D1) entre le N-ième bloc de première couleur et le N-ième bloc de deuxième couleur dans la direction de transport du support d'image est égale à une distance entre la première unité de formation d'image et la deuxième unité de formation d'image ;
une distance (D2) entre le N-ième bloc de deuxième couleur et le N-ième bloc de troisième couleur dans la direction de transport du support d'image est égale à une distance entre la deuxième unité de formation d'image et la troisième unité de formation d'image ; et
une distance (D3) entre le N-ième bloc de troisième couleur et le N-ième bloc de quatrième couleur dans la direction de transport du support d'image est égale à une distance entre la troisième unité de formation d'image et la quatrième unité de formation d'image,
dans lequel M et N sont des nombres naturels supérieurs à 1, et M est supérieur ou égal à N.

2. Procédé selon la revendication 1, dans lequel, parmi la distance entre la première unité de formation d'image et la deuxième unité de formation d'image, la distance entre la deuxième unité de formation d'image et la troisième unité de formation d'image, et la distance entre la troisième unité de formation d'image et la quatrième unité de formation d'image, au moins deux sont égales.

3. Procédé selon la revendication 1, dans lequel la distance entre la première unité de formation d'image et la deuxième unité de formation d'image, la distance entre la deuxième unité de formation d'image et la troisième unité de formation d'image, et la distance entre la troisième unité de formation d'image et la quatrième unité de formation d'image ne sont pas égales.

4. Procédé selon la revendication 1, dans lequel :
dans la direction de transport du support d'image, les M blocs de première couleur et les M blocs de troisième couleur présentent un même ordre d'agencement, dans lequel l'ordre d'agencement est déterminé par le niveau de concentration de couleur ; et/ou,
dans la direction de transport du support d'image, les M blocs de deuxième couleur et les M blocs de quatrième couleur présentent un même ordre d'agencement, dans lequel l'ordre d'agencement est déterminé par le niveau de concentration de couleur.

5. Procédé selon la revendication 4, dans lequel la détermination de l'ordre d'agencement par le niveau de concentration de couleur comprend le fait que, dans la direction de transport du support d'image, les niveaux de concentration de couleur sont agencés du plus élevé au plus faible.

6. Procédé selon la revendication 1, dans lequel une distance entre des blocs de couleur adjacents parmi les M blocs de première couleur, les M blocs de deuxième couleur, les M blocs de troisième couleur et les M blocs de quatrième couleur est positivement corrélée à une durée de la tension de développement.

7. Dispositif de formation d'image (10), comprenant :
un processeur (11) ; et
une première unité de formation d'image (Kx) et une deuxième unité de formation d'image (Mx), dans lequel la première unité de formation d'image et la deuxième unité de formation d'image sont alimentées par une même alimentation électrique,
dans lequel le processeur est configuré pour commander la première unité de formation d'image afin de former un motif de correction de première couleur (K1 à K6, K1 à K8) sur un support d'image, et commander la deuxième unité de formation d'image afin de former un motif de correction de deuxième couleur (M1 à M6, M1 à M8) sur le support d'image, et
dans lequel le support d'image comprend une première zone d'imagerie (A) et une deuxième zone d'imagerie (B) disposées respectivement sur deux côtés le long d'une direction perpendiculaire à une direction de transport du support d'image, le motif de correction de première couleur est imagé dans la première zone d'imagerie, et le motif de correction de deuxième couleur est imagé dans la deuxième zone d'imagerie.
dans lequel :
le dispositif de formation d'image comprend en outre une troisième unité de formation d'image (Cx) et une quatrième unité de formation d'image (Yx), dans lequel la première unité de formation d'image, la deuxième unité de formation d'image, la troisième unité de formation d'image et la quatrième unité de formation d'image sont alimentées par la même alimentation électrique ;
le processeur est configuré pour commander une tension de développement de l'alimentation électrique de sorte que la première unité de formation d'image forme le motif de correction de première couleur sur le support d'image, la deuxième unité de formation d'image forme le motif de correction de deuxième couleur sur le support d'image, la troisième unité de formation d'image forme un motif de correction de troisième couleur (C1 à C6, C1 à C8) sur le support d'image, et la quatrième unité de formation d'image forme un motif de correction de quatrième couleur (Y1 à Y6, Y1 à Y8) sur le support d'image ; et
le motif de correction de première couleur et le motif de correction de troisième couleur sont imagés successivement dans la première zone d'imagerie le long de la direction de transport du support d'image, et le motif de correction de deuxième couleur et le motif de correction de quatrième couleur sont imagés successivement dans la deuxième zone d'imagerie le long de la direction de transport du support d'image ;
le processeur est destiné à exécuter les instructions de programme (13), dans lequel : le dispositif de formation d'image comprend une mémoire (12) stockant des instructions de programme informatique, dans lequel, lorsque les instructions de programme informatique sont exécutées par le processeur, le dispositif de formation d'image exécute le procédé de formation d'un motif de correction de couleur selon l'une quelconque des revendications 1 à 6.

8. Support de stockage lisible par ordinateur, comprenant un programme stocké, dans lequel, lorsque le programme est exécuté, un dispositif de formation d'image (10) dans lequel se trouve le support de stockage lisible par ordinateur est commandé pour exécuter le procédé de formation d'un motif de correction de couleur selon l'une quelconque des revendications 1 à 6.

9. Produit de programme informatique, comprenant un programme/une instruction informatique (13), dans lequel le programme/l'instruction informatique, lorsque le programme/l'instruction informatique est exécuté par un processeur (11) d'un dispositif de formation d'image, met en œuvre le procédé de formation d'un motif de correction de couleur selon l'une quelconque des revendications 1 à 6.
